# EUROPÄISCHE PATENTSCHRIFT

(11) **EP 3 545 595 B1**
(45) Veröffentlichungstag und Bekanntmachung des Hinweises auf die Patenterteilung: **03.07.2024**
(21) Anmeldenummer: 17804892.2
(22) Anmeldetag: 27.11.2017
(51) Int. Cl.: H02G 3/22

(54) **KABELDURCHFÜHRUNG MIT EINEM TEILBAREN RAHMEN**
CABLE LEAD-THROUGH HAVING A SEPARABLE FRAME
TRAVERSÉE DE CÂBLE COMPORTANT UN CADRE SÉPARABLE

(30) Priorität: 25.11.2016 DE 102016223425
(43) Veröffentlichungstag der Anmeldung: 02.10.2019
(73) Patentinhaber: icotek project GmbH & Co. KG, 73569 Eschach (DE)
(72) Erfinder: EHMANN, Bruno, 73563 Mögglingen (DE); EHMANN, Valentin, 73525 Schwäbisch Gmünd (DE)
(74) Vertreter: Dr. Weitzel & Partner
(86) Internationale Anmeldenummer: PCT/EP2017/080484
(87) Internationale Veröffentlichungsnummer: WO 2018/096136

(56) Entgegenhaltungen:
- DE-A1- 3 610 353
- DE-U1-202015 102 280
- DE-U1-202015 102 280
- US-A- 1 133 976

## Beschreibung

Die Erfindung betrifft eine Kabeldurchführung mit einem teilbaren Rahmen nach der im Oberbegriff von Anspruch 1 näher definierten Art.

Solche Kabeldurchführungen oder auch Kabelhalterhalter dienen dem Zusammenfassen und Halten einer Anzahl von Kabeln oder sonstigen Strängen, die in Tüllen eingelegt sind. Der Rahmen ist dabei teilbar und beispielsweise U-förmig ausgeführt. Er weist dann demgemäß zwei Schenkelleisten auf sowie eine diese beiden miteinander verbindende Längsleiste auf. Eine zweite Längsleiste oder ein zweiter U-förmiger Rahmen als Deckel verschließen den Aufbau. Im Inneren des Rahmens sind Trennwände vorgesehen, zwischen welchen die Tüllen aufgenommen werden. Die im Rahmen aufnehmbaren Tüllen weisen wenigstens eine Bohrung zum Hindurchführen eines Kabels auf. Die Tüllen bestehen aus elastischem Material. Die einzelne Tülle weist häufig einen Schlitz auf, sodass die Tülle aufgeklappt bzw. gespreizt werden kann, um das Kabel einfach einzulegen. Hierdurch lassen sich auch Kabel einlegen, welche bereits mit Steckern versehen sind. Die mit Kabeln bestückten Tüllen werden sodann in den Innenraum des Rahmens eingelegt und füllen diesen aus. Der Rahmen wird dann mit dem Deckel verschlossen. Dieser übt auf die Tüllen einen Druck aus, sodass die Gesamtheit der kabelbestückten Tüllen innerhalb des Rahmens verpresst werden, wodurch eine gute Abdichtung erzielt wird.

Die WO 01/42046 A2 zeigt einen solchen Aufbau mit zwei- oder mehrteiligen Rahmen, welche durch Verschrauben verschließbar sind. In der EP 2 746 634 A1 sind durch Verklippen verschließbare Rahmen gezeigt. Ein ähnlicher Aufbau ist auch in der WO 2014/180993 A1 beschrieben. Eine weitere Variante hiervon ist auch in der DE 10 2011 001 868 A1 beschrieben.

US 2 417 260 beschreibt eine ähnliche Ausführungsform, aus der man einen Deckel erkennt, welcher auf einem Schenkel des U-förmigen Rahmens aufliegt und durch eine Schraube mit dem Schenkel fest verbunden ist. Im montierten Zustand werden auch hier wiederum die Tüllen mit den darin eingelegten Kabeln eingespannt.

Ferner zeigt die WO 2016/0177364 A1 eine Anordnung zur Wanddurchführung für mehrere Kabel. Diese Anordnung weist einen in der Ebene quer zur Laufrichtung der Kabel nicht teilbaren Rahmen auf, bei welchem die Tüllen in ein bestehendes kreuzförmiges oder doppelkreuzförmiges Element aus einzelnen Trennwänden eingelegt werden. Die eingelegten Kabel werden dann samt der Tüllen und dem doppelkreuzförmigen Element in den nicht teilbaren Rahmen eingeschoben, und zwar in Laufrichtung der Kabel. Der Rahmen wird dann mit einem geteilten Abschlussdeckel jeweils wiederum in Laufrichtung der eingelegten Kabel verschlossen. Dies ist in der Montage außerordentlich aufwändig.

Eine im Wesentlichen ähnliche Technik ist auch aus der DE 10 2007 060 100 A1 bekannt. Hier werden einzelne Elemente in einen nicht geteilten Rahmen in Laufrichtung der Kabel eingeschoben und werden mit dem Rahmen verklippt. Hierdurch kann der in der in der oben genannten WO-Schrift erforderliche den Rahmen in Laufrichtung der Kabel verschließende Deckel eingespart werden.

Nachteilig bei den meisten Schriften aus dem Stand der Technik ist die Tatsache, dass die einzelnen Rahmen oder die in Laufrichtung der Kabel eingesteckten Kreuze oder Doppelkreuze entsprechend der verwendeten Tüllen gefertigt sein müssen. Sollen während der Montage verschiedene Tüllen zum Einsatz kommen, beispielsweise bei der Montage an einem Schaltschrank, welcher vor Ort aufgebaut wird, dann muss der Monteur eine große Anzahl von verschiedenen Rahmen oder Kreuzen beziehungsweise Doppelkreuzen mit sich führen, um die jeweiligen Anforderungen an die Montage der Kabeldurchführung erfüllen zu können. Dies ist mit erheblichem Aufwand hinsichtlich der Logistik beim Monteur verbunden. Da die Teile typischerweise im Spritzgussverfahren hergestellt werden, ist auch die Herstellung mit erheblichem Aufwand und hohen Kosten verbunden, da bekanntlich teure Werkzeuge notwendig werden, um Spritzgussteile herzustellen. Ist eine Vielzahl von einzelnen Spritzgussteilen herzustellen, dann sind die Werkzeugkosten sehr hoch und die produzierten Rahmen werden entsprechend teuer.

Eine weitere Kabelhalterung, bei welcher Tüllen für die Kabel zwischen zwei Platten verspannt werden, ist aus der US 1,133,976 bekannt. Zum weiteren Stand der Technik kann ferner aus die DE 36 10 353 A1 verwiesen werden.

Der Erfindung liegt die Aufgabe zugrunde, eine Kabeldurchführung gemäß Anspruch 1 derart zu gestalten, dass diese noch einfacher und effizienter in der Montage wird.

Diese Aufgabe wird mit einer Kabeldurchführung gemäß Anspruch 1 gelöst. Vorteilhafte Ausgestaltungen und Weiterbildungen ergeben sich aus den hiervon abhängigen Unteransprüchen.

Die erfindungsgemäße Kabeldurchführung sieht einen teilbaren Rahmen aus wenigstens zwei Längsleisten und wenigstens zwei Schenkelleisten vor, vergleichbar wie die Aufbauten im Stand der Technik. Die Längsleisten und Schenkelleisten spannen zusammen eine Ebene auf, welche senkrecht zur Laufrichtung der durchgeführten Kabel liegt. Zwischen den Längsleisten stehen Trennelemente, von denen zumindest eines einen Zwischenraum zwischen sich und dem benachbarten Trennelement oder einer der Schenkelleisten ausbildet. Dieser Zwischenraum ist zur Aufnahme wenigstens einer Tülle ausgebildet, welche so aus dem Stand der Technik bekannt ist. Diese Tülle, welche zumeist aus elastischem Material ausgebildet ist, und wenigstens eine Bohrung zur Durchführung eines Kabels aufweist, kann außerdem mit einem Schlitz zwischen der Bohrung und dem Randumfang versehen sein, sodass diese aufgeklappt werden kann, um das Kabel einfach und effizient einzulegen und insbesondere auch vorkonfektionierte Kabel mit Steckern aufnehmen zu können.

In der Praxis ist es so, dass diese Tüllen als auf ihr Rastermaß quasistandardisierte Elemente vorliegen. Hierdurch ist es möglich, innerhalb eines Rahmens unterschiedliche Tüllen einzusetzen. Bisher erfordert dies Rahmen mit unterschiedlich angeordneten Trennelementen. Um dieser Problematik abzuhelfen, ist es erfindungsgemäß vorgesehen, dass nun jede der Längsleisten auf zumindest ihrer der jeweils anderen Längsleiste zugewandten Seite eine Vielzahl von Bohrungen oder Ausnehmungen aufweist. Jedes Trennelement korrespondiert dabei zumindest im Bereich wenigstens einer seiner stirnseitigen Enden mit den Bohrungen oder Ausnehmungen in den Längsleisten, sodass die Trennelemente quer zur Laufrichtung der durchgeführten Kabel in die Bohrungen oder Ausnehmungen einstreckbar sind.

Eines oder mehrere der Trennelemente lassen sich bei der erfindungsgemäß ausgestalteten Kabeldurchführung also in den Rahmen, welcher zuvor keine Trennelemente aufweisen muss, einstecken. In die Bohrungen oder Ausnehmungen lassen sich die Trennelemente dann also in einer Richtung schräg oder vorzugsweise parallel zu den Schenkelleisten in die Längsleisten einstecken. Durch die Vielzahl von Bohrungen oder Ausnehmungen ist es möglich, die Trennelemente an verschiedenen Positionen bezüglich der Breite des Rahmens, also in verschiedenem Abstand zueinander oder zu den Schenkelleisten des geteilten Rahmens, anzuordnen. Hierdurch können vor Ort bei der Montage die Zwischenräume zwischen den Trennelementen und/oder einer Trennelement und den Schenkelleisten so angepasst werden, dass die entsprechenden Tüllen zuverlässig aufgenommen werden können. Der Werker muss dafür lediglich den Rahmen und eine gewisse Anzahl von Trennelementen mit sich führen, welche jedoch prinzipiell alle gleich, oder gemäß einer vorteilhaften Weiterbildung der Idee, in unterschiedlicher Länge ausgebildet sind. Mit wenigen einzelnen Teilen lässt sich so praktisch jede Montageaufgabe und die Aufnahme verschiedenartiger Tüllen in der Kabeldurchführung sehr einfach und effizient vor Ort bewerkstelligen.

Erfindungsgemäß sind die Trennelemente in Laufrichtung der eingelegten Kabel mit wenigstens einer Vertiefung tailliert ausgebildet. Diese sind also entsprechend tailliert ausgebildet, indem beispielsweise ein doppel-T-förmiges Profil der Trennelemente vorgesehen ist. Weitere Varianten wie beispielsweise ein doppel-kreuzförmiges Profil oder dergleichen sind ebenso denkbar. Hierdurch kommt es mit den mit einem vergleichbaren Profil ausgestalteten Tüllen ergänzend zum Anpressen des Materials der elastischen Tüllen an die Trennelemente zu einer formschlüssigen Verbindung, sodass eine sichere Zugentlastung der Tüllen bei gleichzeitiger hoher Dichtheit des Aufbaus gewährleistet ist. Alternativ dazu können die Trennelemente auch gebaucht ausgebildet sein. Sie bieten dann die Möglichkeit, ebenso einen formschlüssigen Kontakt mit den einzelnen Tüllen herzustellen. Gebauchte in Laufrichtung der eingelegten Kabel mittig auf der jeweiligen Längsleiste positionierte Trennelemente ermöglichen außerdem, dass das Material der Tüllen die Trennelemente weitgehend umgreift und mit einem minimalen Spalt oder einander berührend aneinander liegt, was eine sehr hohe Abdichtung des Aufbaus gewährleistet, da die Abdichtung dann überwiegend durch das elastische Material der Tüllen erfolgen kann.

Eine sehr günstige Ausgestaltung der Kabeldurchführung sieht es dabei vor, dass jedes Trennelement auf wenigstens einer seiner den Längsleisten zugewandten Seite mit Zapfen oder Einsteckleisten versehen ist, welche jeweils mit den Bohrungen oder den Ausnehmungen in den Längsleisten korrespondieren. Das Trennelement kann also alternativ zum Einstecken des gesamten Trennelements in die entsprechende Ausnehmung oder Bohrung auch Zapfen oder Einsteckleisten aufweisen, sodass das Trennelement mit diesen Zapfen oder Einsteckleisten in die Bohrungen oder Ausnehmungen eingesteckt werden kann. Hierdurch kommt es typischerweise zu einer Anlage der eigentlichen Stirnseiten, welche die Zapfen oder Einsteckleisten tragen, an der Längsleiste, sodass unabhängig von der Tiefe der Bohrung oder Ausnehmung eine zuverlässige Positionierung des Trennelements in der Höhe gewährleistet ist.

Gemäß einer vorteilhaften Weiterbildung der Idee ist es vorgesehen, dass die Bohrungen oder Ausnehmungen in den Längsleisten so ausgeführt sind, dass zwischen den Bohrungen oder den Ausnehmungen und beiden Außenkante der Längsleiste in Laufrichtung der durchgeführten Kabel Material der Längsleiste verbleibt. Die Bohrungen sind also innerhalb des Materials der Längsleiste platziert beziehungsweise die Ausnehmungen sind beispielsweise in der Form von Nuten ausgeführt, welche aber nicht randoffen sind. Hierdurch ist gewährleistet, dass die Trennelemente nur in der Einstreckrichtung quer zur Laufrichtung der Kabel eingesteckt werden können. Die nicht randoffenen Bohrungen und Ausnehmungen erlauben dabei einerseits eine sehr gute Abdichtung des Aufbaus, sodass durch den Rahmen mit eingelegten und in dem Rahmen verpressten Tüllen die für die Kabeldurchführung vorgesehene Öffnung, beispielsweise die Öffnung in der Wand eines Schaltschranks, zuverlässig abgedichtet wird. Andererseits ermöglichen die in beide Richtungen nicht randoffenen Bohrungen oder Ausnehmungen auch eine gute Zugentlastung, insbesondere wenn die Tüllen, wie es allgemein bekannt und üblich ist, über einen Formschluss an den Schenkelleisten und den Trennelementen anliegen, sodass über die Tüllen gleichzeitig eine Zugentlastung bewerkstelligt wird. Anders als bei den Aufbauten aus dem Stand der Technik garantieren hier die nicht randoffenen Ausnehmungen und Bohrungen zuverlässig, dass keine Bewegung der Trennelemente in Laufrichtung der Kabel, also in deren Axialrichtung, auftreten kann.

Eine weitere sehr vorteilhafte Ausgestaltung der Kabeldurchführung sieht es ferner vor, dass die Bohrungen als Sacklochbohrungen ausgebildet sind oder die Ausnehmungen als nicht durch das Material der Längsleiste durchgehende Ausnehmungen ausgebildet sind. Hierdurch ist sichergestellt, dass quer zur Laufrichtung des Kabels der Aufbau in sich dicht bleibt und nicht durch durchgehende Nuten, Bohrungen oder dergleichen hinsichtlich seiner Abdichtung kritisch ist.

Eine weitere sehr vorteilhafte Ausgestaltung der Kabeldurchführung sieht es vor, dass die geometrischen Abmessungen oder die Formgebung der jeweils korrespondierenden stirnseitigen Enden, Zapfen und Bohrungen oder Einsteckleisten und Ausnehmungen so ausgebildet ist, dass die eingesteckten Trennelemente in einer der Längsleisten einen strammen Sitz aufweisen. Diese Ausgestaltung, beispielsweise indem die Maße so gewählt werden, dass ein strammer Sitz im Sinne einer Presspassung vorliegt, ermöglicht einerseits eine gute Abdichtung und erlaubt andererseits das Einstecken der Trennelemente in eine der Längsleisten und das spätere Einführen der Tüllen und der Kabel in diesen Aufbau, ohne dass die Gefahr besteht, dass sich die Trennelemente während der Montage wieder aus ihrer eingesteckten Position lösen, was den Montageaufwand erheblich größer machen würde. In der anderen der Längsleisten weisen die Trennelemente dann einen lockeren Sitz im Sinne einer Spielpassung auf. Hierdurch lässt sich bei einem Lösen der einen Längsleiste, beispielsweise um einen Teil der montierten Kabel wieder zu demontieren, sicherstellen, dass die Trennelemente in der anderen Längsleiste über den strammen Sitz verbleiben, sodass der Aufbau auch entsprechend einfach demontiert und erneut montiert werden kann, ohne dass das "Innenleben" des Rahmens bei der Montage herausfallen kann.

Gemäß einer weiteren sehr günstigen Ausgestaltung hiervon kann es ergänzend oder alternativ vorgesehen sein, dass der stramme Sitz über Dichtelemente erreicht wird, welche zusätzlich zur mechanischen Fixierung während der Montage eine entsprechende Abdichtung gewährleisten, was ein weiterer Vorteil hinsichtlich der Dichtheit des Gesamtaufbaus ist.

Eine außerordentlich günstige Weiterbildung der Idee sieht es ferner vor, dass zwischen den Schenkelleisten oder zwischen zwei der Trennelemente oder zwischen einer der Schenkelleisten und einem der Trennelemente Zwischenböden vorgesehen sind. Solche Zwischenböden können beispielsweise lose eingelegt werden, um bei der Bestückung des Rahmens mit den Tüllen zusätzliche Stabilität in der Breite zu schaffen und den beim Verschließen des Rahmens auf die Tüllen aufgebrachten Druck gleichmäßig über alle Tüllen zu verteilen, sodass eine sehr gute Abdichtung zu erzielen ist.

Gemäß einer sehr vorteilhaften Weiterbildung hiervon ist es insbesondere vorgesehen, dass Zwischenböden zwischen zwei der Trennelemente oder zwischen einer der Schenkelleisten und einem der Trennelemente so ausgebildet sind, dass sie zumindest in Laufrichtung der eingelegten Kabel formschlüssig mit den Trennelementen oder den Trennelementen und den Schenkelleisten zusammenwirken. Sie können also in Laufrichtung der Kabel nicht aus dem montierten Rahmen herausgezogen werden und unterstützen so ideal auch die Anforderungen an den Rahmen hinsichtlich der Zugentlastung für die eingelegten Kabel.

Eine weitere Ausgestaltung kann es auch vorsehen, dass die Zwischenböden zwischen den Schenkelleisten ausgeführt sind. In diesem Fall sind die Zwischenböden idealerweise fest mit den Schenkelleisten verbunden oder insbesondere einstückig mit diesen ausgeführt. Sie bilden dann einen Zwischenrahmen, welcher beispielsweise zwischen ein U-förmiges Rahmenunterteil und einen U-förmigen Rahmendeckel entsprechend eingelegt werden kann, und wie er prinzipiell aus der eingangs genannten WO 01/42046 A2, beispielsweise aus den Figuren 9/10, bekannt ist. In der erfindungsgemäßen Variante sind dann in dem Zwischenboden, welcher nun eine Art weitere Längsleiste ausbildet, zumindest an den zwei gegenüberliegenden, den jeweils anderen Längsleisten zugewandten Seiten, Ausnehmungen oder Bohrungen vorgesehen, um auch hier Trennelemente einstecken zu können und den Aufbau des Rahmens im erfindungsgemäßen Sinn zu komplettieren.

Ferner können gemäß einer vorteilhaften Weiterbildung die Trennelemente auf ihrer mit den Zapfen oder Einsteckleisten versehenen Stirnseite eine Dichtung aufweisen. Somit wird nicht nur die Dichtheit zwischen den Zapfen und den Bohrungen beziehungsweise den Einsteckleisten und den Ausnehmungen garantiert, sondern auch zwischen den Trennelementen und der Längsleiste, sodass hierdurch ein weiterer Vorteil hinsichtlich der Abdichtung des Aufbaus entsteht, welcher auch entsprechend hohe Dichtheiten, beispielsweise der Schutzklasse IP65 und mehr, erreichen kann.

Die Kabeldurchführung kann prinzipiell mit ihrem teilbaren Rahmen so ausgeführt sein, dass dieser beispielsweise mit zwei oder drei Längsleisten ausgeführt ist, welche über vier oder sechs Schenkelleisten entsprechend miteinander verbunden werden. Die Längsleisten und Schenkelleisten können also als einzelne Bauteile vorliegen, sodass der Rahmen erst vor Ort bei der Montage tatsächlich aufgebaut wird. Gemäß einer außerordentlich günstigen Ausgestaltung ist die Kabeldurchführung ist jedoch so ausgeführt, dass an jeder der Längsleisten eine Schenkelleiste vorgesehen ist, sodass die Längsleiste und die Schenkelleiste ein L bilden oder alternativ dazu das an beiden Enden jeweils wenigstens einer der Längsleisten jeweils eine der Schenkelleisten vorgesehen ist, sodass die Längsseite und die Schenkelleiste ein U bilden. Der erste Aufbau ist die Variante, bei welcher eine Schenkelleiste und die Längsleiste ein L ausbilden. Dabei können zwei gleichartige Bauteile miteinander verbunden werden, beispielsweise durch Verschrauben oder Verklippen. Die Alternative sieht es vor, dass beispielsweise zwei U-förmige Teile miteinander verbunden werden, was ebenfalls die Verwendung von Gleichteilen ermöglicht. Ferner ist es möglich, einen U-förmigen Rahmen vorzusehen, welcher dann mit einer der Längsleisten als Deckel verschlossen wird. In den verschiedenen Varianten, beispielsweise den beiden U-förmigen Varianten des Rahmenoberteils und des Rahmenunterteils oder dem U-förmigen Rahmenoberteil mit geradem Deckel, lassen sich weitere Zwischenelemente mit Längsleiste und Schenkeln einlegen, welche dann entsprechend H-förmig, U-förmig oder im Falle der L-förmigen Ausgestaltung der Einzelteile des Rahmens in der Art eines liegenden Z mit rechtwinkligen Übergängen zwischen den Schenkelleisten und der Längsleiste ausgestaltet wären.

Eine weitere sehr vorteilhafte Ausgestaltung der Idee sieht es ferner vor, dass die Trennelemente ungleich hoch sind. Die Trennelemente können also in verschiedenen Höhen eingesetzt und vorgehalten werden. Dies ermöglicht es beispielsweise, nebeneinander zwei kleine Tüllen mit einem Rastermaß von 1:1 einzusetzen und darüber eine größere Tülle beispielsweise mit einem Rastermaß von 2:2 oder 2:1. Daneben kann dann über ein entsprechend höheres Trennelement, welches in der Höhe ein Rastermaß von 2 oder 3 aufweist, dieser Bereich abgeschlossen werden und daneben können dann weitere Tüllen positioniert werden. In der oben beschriebenen vorteilhaften Ausgestaltung mit dem lose eingelegten Zwischenboden kann dieser Bereich mit dem in der Höhe kürzeren Trennelement nach oben, oder beim umgekehrten Einbau auch nach unten, vorzugsweise mit einem solchen Zwischenboden abgeschlossen werden. Um auch auf dem Zwischenboden wieder den Einsatz eines der Trennelemente mit kürzerer Höhe zu ermöglichen, kann es vorgesehen sein, dass der Zwischenboden gemäß einer vorteilhaften Weiterbildung der Idee auf zumindest einer Seite eine Vielzahl von Ausnehmungen oder Bohrungen analog zu denen der Längsleisten aufweist.

Die unterschiedliche Höhe von Trennelementen ermöglicht also die Erhöhung der Flexibilität. Durch den strammen Sitz der einzelnen Tüllen in einer der Längsleisten reicht dies im Normalfall aus, um, bei einer entsprechenden Tiefe der Stirnseite der Tülle und der Längsleiste jeweils in Laufrichtung der eingelegten Kabel gesehen um eine ausreichende Stabilität zu gewährleisten, auch dann, wenn eine obere Stirnseite eines verkürzten Trennelements lediglich im Bereich einer weiteren Tülle oder einem ebenen Zwischenboden anliegt und nicht in eine Ausnehmung oder die Bohrungen der oberen Längsleiste eingebracht wird. Ein mit Ausnehmungen oder Bohrungen versehener Zwischenboden bringt hier natürlich weitere Vorteile.

Dabei ist es gemäß einer sehr vorteilhaften Weiterbildung vorgesehen, dass die Trennelemente mit einer der Innenhöhe des Rahmens entsprechenden Höhe auf beiden Stirnseiten Zapfen oder Einsteckleisten aufweisen, und dass die Trennelemente mit einer kürzeren Höhe nur auf einer der Stirnseiten Zapfen oder Einsteckleisten aufweisen. Hierdurch sind die kürzeren Trennelemente auf ihrer nicht mit der Längsleiste über Einstecken verbundenen Seite eben ausgeführt und gewährleisten so eine ausreichende Abdichtung beim Kontakt mit der Unterseite oder Oberseite einer der Tüllen oder einem ebenen Zwischenboden.

Gemäß einer vorteilhaften Weiterbildung der Erfindung kann es bei taillierten Trennelementen vorgesehen sein, dass die Trennelemente in wenigstens einer der Vertiefungen ihrer Taillierung mit einem elastischen Dichtmaterial versehen sind. Die Trennelemente selbst können also auch ein Dichtmaterial aufweisen. Dies kann beispielsweise dann von Vorteil sein, wenn die Tüllen nicht aus elastischem Material sondern aus entsprechend festeren Materialien ausgebildet sind. Insbesondere kann es auch dann von Vorteil sein, wenn entsprechend des Rastermaßes eine bestimmte Anzahl von Tüllen in den Rahmen eingelegt wird. Ist der Rahmen beispielsweise für ein Rastermaß von 5 in der Breite vorgesehen und sieht dabei das Einbringen von im Normalfall vier Trennelementen vor, sodass jedes Raster mit einer Tülle mit dem Rastermaß von 1:1 belegt werden kann, dann kann es in der Praxis dazu kommen, dass bei der Verwendung von beispielsweise zwei Tüllen mit dem Rastermaß von 2:2 und einer Tülle mit dem Rastermaß von 1:1 in der Breite des Rahmens Bauraum verbleibt, da dieser in der Gesamtbreite auf die Verwendung von vier einzelnen Trennelementen vorgesehen ist, während nun lediglich zwei Trennelemente zum Einsatz gekommen sind. In diesem Fall kann sehr einfach und effizient durch zwei mal zwei direkt nebeneinander angeordnete Trennelemente die Gesamtbreite wieder vollständig ausgefüllt werden, ohne dass spezielle Tüllen oder spezielle Trennelemente vorgesehen werden müssen. Für diesen Fall ist es von besonderem Vorteil, wenn die Trennelemente in einer Vertiefung ihrer Taillierung mit elastischem Dichtmaterial versehen sind. Dieses elastische Dichtmaterial kann direkt an den Trennelementen vorgesehen sein, beispielsweise im Herstellungsprozess angespritzt sein. Es kann jedoch auch bei der Montage sehr einfach und effizient durch ein in die Vertiefung der Taillierung eingeklebtes Dichtband vor Ort vom Monteur angebracht werden. Die nebeneinander liegenden Trennelemente gewährleisten dann auch in dem Bereich, in dem diese sich direkt berühren, eine ausreichende Abdichtung, vergleichbar wie in den Bereichen, wo die Trennelemente mit den elastischen Tüllen in Kontakt stehen. Dies erhöht die Flexibilität des Aufbaus weiter und gewährleistet dabei in jeder Montagesituation eine hohe Abdichtung des Gesamtaufbaus.

Eine weitere sehr vorteilhafte Ausgestaltung der Trennelemente kann es ferner vorsehen, dass jedes der Trennelemente in Laufrichtung der eingelegten Kabel aus wenigstens zwei Einzelelementen ausgebildet ist. Anstelle des oben beschriebenen doppel-T-förmigen Profils können also auch nur zwei Einzelelemente, beispielsweise rechteckige Balken oder runde Stäbe, als Trennelemente eingesetzt werden. Der Vorteil gegenüber einem einzigen Trennelement, welches beispielsweise auch als runder Stab gemäß der zuletzt beschriebenen Ausführungsvariante ausgebildet sein könnte, liegt darin, dass sich die für die Zugentlastung aufgebrachten Kräfte und die Abdichtung auf zwei getrennte Bereiche aufteilt, sodass die Kräfte gleichmäßiger in die Längsleisten und damit die Kabeldurchführung an sich eingetragen werden.

Prinzipiell ist es denkbar, dass die Trennelemente schräg eingesetzt werden, um beispielsweise für spezielle Anwendungen schräg ausgeformte Tüllen aufzunehmen. In der Praxis wird dies jedoch eine untergeordnete Rolle spielen. Vielmehr ist es hier von entscheidendem Vorteil, wenn die Trennelemente parallel zu den Schenkelleisten verlaufen, welche ihrerseits senkrecht auf den Längsleisten stehen. So wird alles in allem ein Aufbau mit im montierten Zustand senkrecht aufeinander stehenden Bauteilen erzielt, welcher entsprechend einfach in der Montage und bei der Verwendung vorgefertigter Trennelemente und Tüllen ist.

Die Schenkel können dabei untereinander oder mit einer der Längsleiste als Deckel sowohl verschraubt als auch verklippt werden, wie dies bereits aus dem eingangs genannten Stand der Technik bekannt ist.

Ferner ist es denkbar, z.B. bei sehr breiten Rahmen ergänzend zu den steckbaren Trennelementen wenigstens ein feststehendes Trennelement, z.B. in Form einer mittigen Trennwand, vorzusehen. Diese kann dann beispielsweise eine Verschraubung tragen, sodass eine hohe Stabilität und eine hohe Dichtheit durch eine starke und sehr gleichmäßige Verpressung der Tüllen möglich wird.

Weitere vorteilhafte Ausgestaltungen und Weiterbildungen der erfindungsgemäßen Kabeldurchführung ergeben sich auch aus den restlichen abhängigen Unteransprüchen und werden anhand des Ausführungsbeispiels deutlich, welches nachfolgend unter Bezugnahme auf die Figuren näher beschrieben ist.

Darin ist im Einzelnen Folgendes dargestellt:
- Figur 1: zeigt eine Kabeldurchführung gemäß dem Stand der Technik in einer dreidimensionalen Ansicht.
- Figur 2: zeigt eine Kabeldurchführung gemäß dem Stand der Technik in einer alternativen Ausführungsform im geschlossenen Zustand.
- Figur 3: zeigt eine Kabeldurchführung gemäß dem Stand der Technik in einer weiteren alternativen Ausführungsform.
- Figur 4: zeigt in perspektivischer Darstellung eine erfindungsgemäße Ausführungsform eines Kabelhalters.
- Figur 5: zeigt den Gegenstand von Figur 2 in einer Seitenansicht.
- Figur 6: zeigt den Gegenstand von Figur 2 in einer Draufsicht.
- Figur 7: zeigt eine Schnittansicht gemäß der Schnittlinie VII - VII in Figur 5.
- Figur 8: zeigt eine alternative Ausgestaltung in perspektivischer Darstellung.
- Figur 9: zeigt den Aufbau ähnlich der Schnittansicht in Figur 7 anhand der alternativen Ausführungsform von Figur 8.
- Figur 10: zeigt einen Ausschnitt aus einer der Längsleisten einer alternativen Ausführungsvariante mit aufgestecktem zweiteiligem Trennelement.
- Figur 11: zeigt eine prinzipmäßige Schnittdarstellung gemäß der Line XI - XI in Figur 10.
- Figur 12: zeigt eine prinzipmäßige Schnittdarstellung gemäß der Linie XII - XII in Figur 15 mit einer weiteren alternativen Ausführungsform des Trennelements.
- Figur 13: zeigt eine prinzipmäßige Schnittdarstellung gemäß der Linie XII - XII in Figur 15 mit einer noch weiteren alternativen Ausführungsform des Trennelements.
- Figur 14: zeigt eine erste Montagemöglichkeit der Kabeldurchführung in perspektivischer Darstellung.
- Figur 15: zeigt eine alternative Ausführungsvariante analog zu der in Figur 14, jedoch in einer Frontansicht.
- Figur 16: eine weitere Ausführungsvariante analog zu der in Figur 15 mit einem anderen Aufbau des Rahmens.
- Figur 17: zeigt eine weitere alternative Ausführungsvariante analog zur der in Figur 15.
- Figur 18: zeigt eine noch weitere alternative Ausführungsvariante analog zur der in den Figuren 15 und 17.
- Figur 19: zeigt eine prinzipmäßige Schnittdarstellung gemäß der Linie XIX - XIX in den Figuren 17 und 18 ohne Tüllen.

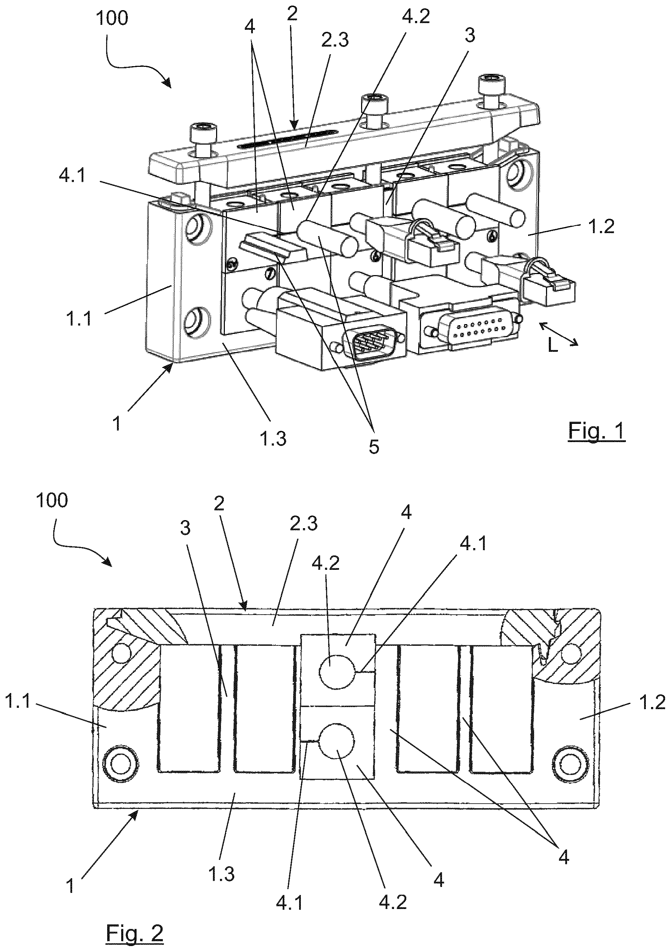

In der Darstellung der Figur 1 ist in einer dreidimensionalen Ansicht eine Kabeldurchführung 100 gemäß dem Stand der Technik zu erkennen. Diese weist in dem hier dargestellten Ausführungsbeispiel einen geteilten Rahmen mit einem Rahmenunterteil 1 und einem Deckel 2 auf. Das Rahmenunterteil 1 besteht aus einer Längsleiste 1.3 sowie zwei Schenkelleisten 1.1 und 1.2. Der Deckel 2 des Rahmens bildet praktisch eine zweite Längsleiste 2.3 aus. Zwischen den Schenkelleisten 1.1 und 1.2 ist in dem U-förmigen Rahmenunterteil 1 eine Trennwand 30 zu erkennen, welche in diesem Ausführungsbeispiel des Standes der Technik einstückig mit dem Rahmenunterteil 1 ausgeführt und dementsprechend fest mit der Längsleiste 1.3 verbunden ist. Zwischen der Trennwand 30 und den jeweiligen Schenkelleisten 1.1 und 1.2 sind Zwischenräume, welche in dem hier dargestellten Ausführungsbeispiel jeweils mit Tüllen 4, und zwar insgesamt zehn einzelnen Tüllen 4, versehen sind. Auch zwischen den jeweils aufeinander gestapelten Paaren von Tüllen 4 sind dabei parallel zur Trennwand 30 verlaufende Trennwände 30 mit kleineren Abmessungen angeordnet. Diese sind in der Darstellung der Figur 1 jedoch schlecht zu erkennen.

Jede Tülle 4 weist eine Durchgangsbohrung 4.2 auf, in welcher die durch die Kabeldurchführung 100 hindurchlaufenden Kabel 5 entsprechend aufgenommen sind. Dabei sind jeweils nur einige der Tüllen 4 und Kabel 5 Bezugszeichen versehen.

In der Darstellung der Figur 2 ist ein weiterer aus dem Stand der Technik bekannter Aufbau zu erkennen. Anders als der Aufbau in Figur 1 sind in der Darstellung der Figur 2 lediglich zwei der Tüllen 4 beispielhaft eingezeichnet. Daher ist hier jede der Trennwände 30 erkennbar. Ferner ist zu erkennen, dass die Tüllen 4 jeweils eine Durchgangsbohrung 4.2 zur Aufnahme des Kabels aufweisen. Außerdem ist ein mit 4.1 bezeichneter Schlitz zwischen der Durchgangsbohrung 4 und dem äußeren Umfang der jeweiligen Tülle 4 zu erkennen. Hierdurch kann die Tülle 4 so aufgeklappt werden, dass auch Kabel 5 mit Steckern einfach und effizient in die Durchgangsbohrung 4.2 der Tülle 4 eingelegt werden können. Der Deckel 2 als eine der Längsleisten 2.3 des Rahmens ist bei der Ausführungsvariante der Figur 2 nicht wie bei der Darstellung in Figur 1 verschraubt, sondern wird verklippt. Auch dieser Aufbau ist soweit aus dem Stand der Technik bekannt. Die Laufrichtung L der durch die Kabeldurchführung 100 durchlaufenden Kabel verläuft hier senkrecht in die Blattebene bei der Darstellung der Figur 2.

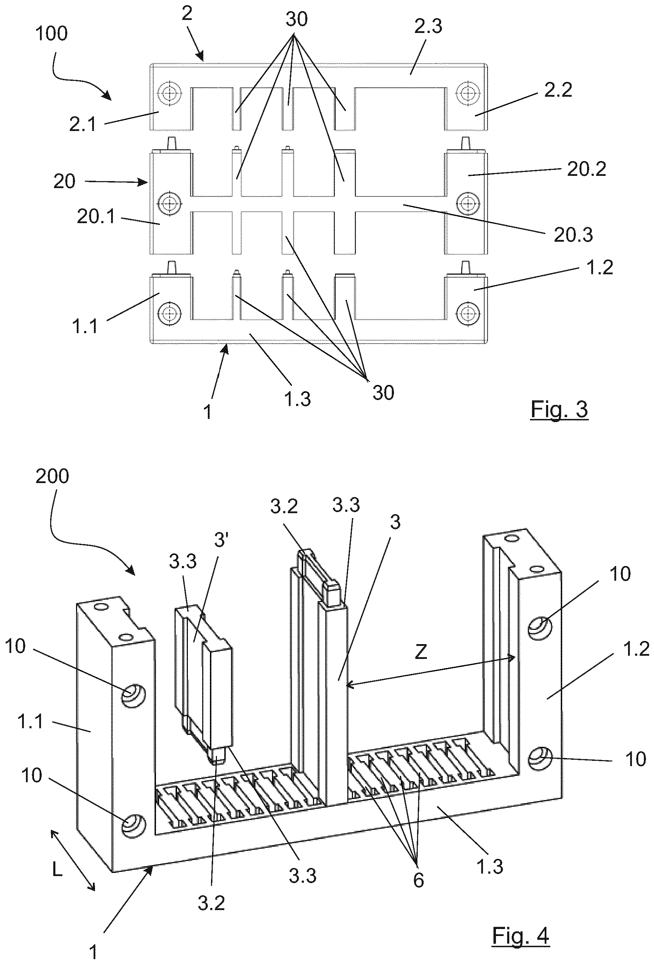

In der Darstellung der Figur 3 ist eine weitere Ausführungsvariante aus dem Stand der Technik zu erkennen, welche sich im Wesentlichen analog zu der in Figur 1 erklärt. Anders als bei der Darstellung dort sind hier keine Kabel 5 und Tüllen 4 eingezeichnet. Vielmehr ist ein Rahmenunterteil 1, bei dem die Schenkelleisten 1.1 und 1.2 mit der Längsleiste 1.3 ohne Berücksichtigung der Trennwände 30 im Wesentlichen ein U bilden, dargestellt. Der Deckel 2 ist hier analog ausgeführt und bildet mit seinen Schenkelleisten 2.1 und 2.2 im Wesentlichen ebenfalls ein umgedrehtes U. Zusätzlich ist bei dem Aufbau, anders als bei dem Aufbau in Figur 1, ein Rahmenzwischenteil 20 zu erkennen, welcher sich, wenn man die Trennwände 30 nicht berücksichtigt, als im Wesentlichen H-förmiges Bauteil aus wiederum zwei Schenkelleisten 20.1, 20.2 und einer Längsleiste 20.3, welche auch als Zwischenboden 11 bezeichnet werden könnte, zusammensetzt. Auch dieser Aufbau ist soweit aus dem eingangs genannten Stand der Technik bekannt.

In der Darstellung der Figur 4 ist das Rahmenunterteil 1 einer Kabeldurchführung 200 gemäß der Erfindung dargestellt. Das Rahmenunterteil 1 ist dabei U-förmig ausgeführt und weist wieder, vorzugsweise in einstückiger Ausführung, die Längsleiste 1.3 unten und die an den Seiten senkrecht darauf stehenden Schenkelleisten 1.1 und 1.2 auf. Ein hier nicht dargestellter Deckel 2 als zweite Längsleiste 2.3 kann beispielsweise vergleichbar wie die Längsleiste 1.3 nur ohne die Schenkelleisten 1.1 und 1.2 ausgeführt sein. Dieser Deckel 2 wird in dem hier dargestellten Ausführungsbeispiel der Figur 4 mit dem Rahmenunterteil 1 verschraubt.

In dem Rahmenunterteil 1 sind zwei Trennelemente 3, 3' zu erkennen. Das eine Trennelement 3 hat eine größere Höhe als das andere der Trennelemente 3'. Das Trennelement 3 mit der größeren Höhe weist an beiden Stirnseiten 3.3 Einsteckleisten 3.2 auf, welche im Querschnitt doppel-T-förmig ausgebildet und an ihrer der Stirnseite 3.3 abgewandten Seite angefast sind. Korrespondierend zu diesen Einsteckleisten 3.2 weist die Längsleiste 1.3 des Rahmenunterteils 1 und, ohne dass es hier dargestellt ist, auch die Längsleiste 2.3 als Deckel 2, Ausnehmungen 6 auf. Eine Vielzahl dieser Ausnehmungen 6 ist, wie es in der Darstellung der Figur 4 zu erkennen ist, nebeneinander angeordnet, sodass die Breite eines Zwischenraums Z beispielsweise zwischen dem höheren der Trennelemente 3 und der Schenkelleiste 1.2 entsprechend variiert werden kann, indem das Trennelement 3 in verschiedene der Ausnehmungen 6 eingesteckt wird.

Das noch nicht in die Ausnehmungen 6 eingesteckte in der Darstellung der Figur 4 links dargestellte kürzere Trennelement 3' weist ebenfalls die Einsteckleiste 3.2 an seiner einen nach unten gewandten Stirnseite 3.3 auf. An ihrer anderen Stirnseite 3.3, welche in der Darstellung der Figur 4 nach oben gewandt ist, ist es eben ausgeführt. Dies ist aus später noch näher erläuterten Gründen bei den gegenüber der Gesamthöhe des Innenraums des Rahmens verkürzten Trennelementen 3' von Vorteil.

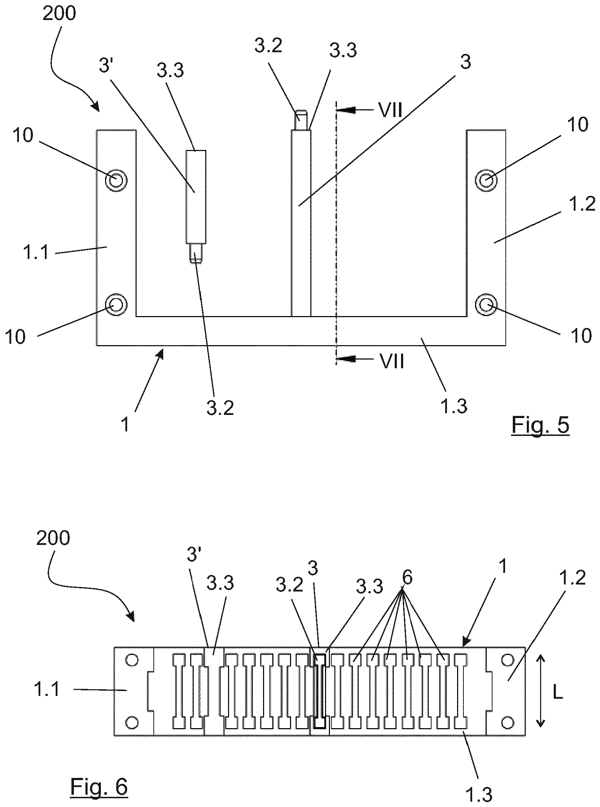

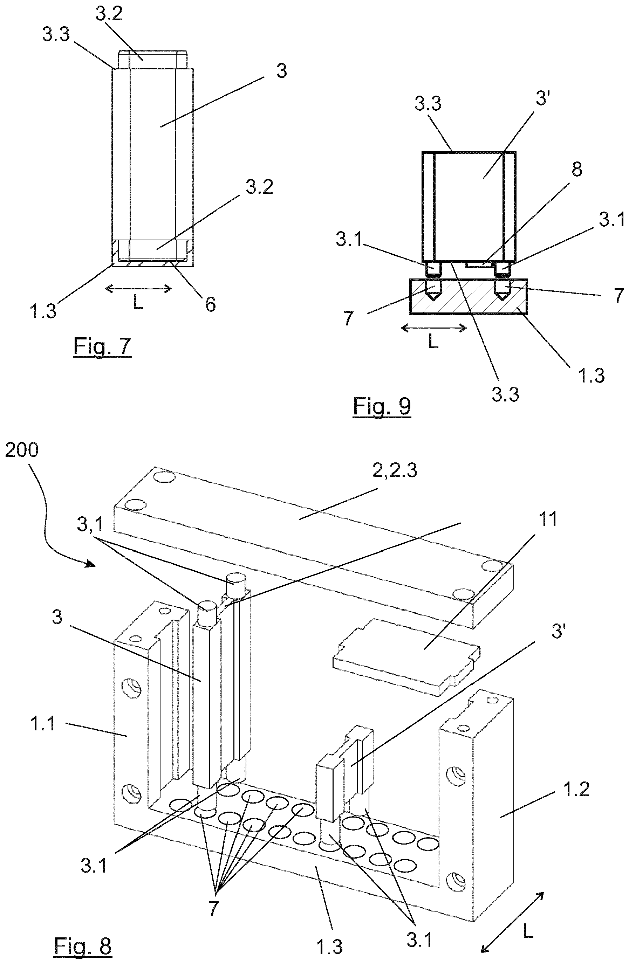

In der Darstellung der Figur 5 ist der Aufbau nochmals analog zur Darstellung in Figur 4 mit noch nicht ganz eingesteckten kürzerem Trennelement 3' in einer Seitenansicht zu erkennen. In der Darstellung der Figur 6 ist derselbe Aufbau nochmals in einer Ansicht von oben zu erkennen. Auch hier sind die einzelnen Ausnehmungen 6 im Bereich der Längsleiste 1.3 sowie die Schenkelleisten 1.1 und 1.2 zu erkennen. Die Trennelemente 3, 3' sind dabei jeweils eingesteckt und weisen in der Laufrichtung L der später durchgeführten Kabel 5 dieselbe Tiefe auf, wie die beiden Schenkelleisten 1.1 und 1.2. Figur 7 zeigt eine prinzipmäßige Schnittansicht durch die Längsleiste 1.3 mit aufgestecktem Trennelement 3 gemäß der Linie VII - VII in Figur 5. Hierbei ist zu erkennen, dass die Nut, welche die Ausnehmung 6 letztlich ausbildet, so gestaltet ist, dass sowohl in der Laufrichtung L der später durchgeführten Kabel 5 als auch in der Höhe in der Darstellung der Figur 6 jeweils Material der Längsleiste 1.3 um die Ausnehmung 6 verbleibt. Hierdurch ist eine Abdichtung einfach möglich und die zur Zugentlastung der Kabel 5 in Laufrichtung L der Kabel genutzten Tüllen 4, welche idealerweise formschlüssig mit dem taillierten Profil der Trennelemente 3, 3' verbunden sind, übertragen die Kräfte der Zugentlastung über die Trennelemente 3, 3' auf das Material der Längsleiste 1.3 und stellen so eine zuverlässige Zugentlastung sicher. Im Falle von randoffenen Ausnehmungen 6, beispielsweise durchlaufenden Nuten, wäre dies so nicht möglich.

Wie bereits erwähnt, sind die Einsteckleisten 3.2 dabei mit einem im Wesentlichen doppel-T-förmigen Profil ausgestattet. Sie sind so gestaltet, dass sie stramm mit ihren Einsteckleisten 3.2 in den Ausnehmungen 6 der Längsleiste 1.3 sitzen, sodass die Trennelemente 3, 3' während der Montage beim Einlegen der Tüllen 4 mit den Kabeln 5 nicht herausfallen können. Durch die Fase an der der Stirnseite 3.3 abgewandten Seite der Einsteckleisten 3.2 wird dabei ein leichtes und zuverlässiges Einstecken möglich. Die Oberflächen können entsprechend bearbeitet, beispielsweise aufgeraut oder mit Querrillen und/oder mit Dichtelementen versehen sein, um diesen strammen Sitz zu unterstützen. Unter einem strammen Sitz ist dabei ein Sitz in der Art einer Presspassung zu verstehen, welche jedoch so ausgestaltet ist, dass ein Zusammenstecken von Hand möglich ist. An der anderen der Längsleisten 2.3, hier also dem nicht dargestellten Deckel 2, ist dabei ein lockerer Sitz zu bevorzugen, beispielsweise in der Art einer Spielpassung, sodass die Einsteckleisten 3.2 in den Ausnehmungen 6 zwar zuverlässig aufgenommen werden, im Falle einer erneuten Demontage jedoch in der anderen der Einsteckleisten 1.3 mit dem strammen Sitz verbleiben und der Deckel 2 abgenommen werden kann, ohne dass die Trennelemente 3, 3' an ihm stecken bleiben. Dies ermöglicht eine besonders einfache Demontage, beispielsweise zum Austausch einzelner Tüllen 4 und/oder Kabel 5. Auch die nachfolgende erneute Montage ist dann einfach und effizient möglich.

Eine alternative Ausführungsform, im Wesentlichen jedoch analog zur Darstellung in Figur 4, ist in der Darstellung der Figur 8 gezeigt. Die Kabeldurchführung 200 ist wiederum in einer dreidimensionalen Ansicht, hier auch zusammen mit dem als zweite Längsleiste 2.3 genutzten Deckel 2, zu erkennen. Der erste Unterschied besteht darin, dass anstelle der Ausnehmungen 6 hier Bohrungen7 vorgesehen sind, welche mit korrespondierenden Zapfen 3.1 an den Trennelementen 3, 3' entsprechend zusammenwirken.

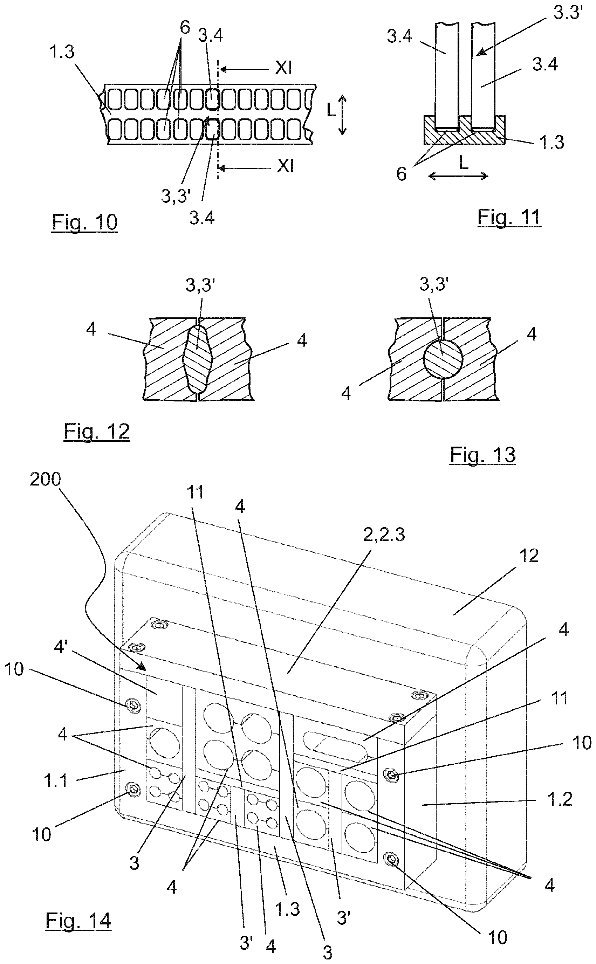

Ferner ist in der Darstellung der Figur 8 ein mit 11 bezeichneter Zwischenboden zu erkennen, welcher in Laufrichtung L der Kabel 5 formschlüssig mit der taillierten Ausgestaltung des Schenkels 1.2 und einem der Trennelemente 3, 3'zusammenwirkt. Dies ist später in den Details einer Montage in Figur 14 nochmals näher erläutert und dargestellt. Der Zwischenboden 11 kann dabei wie hier dargestellt mit glatten Oberflächen ausgeführt sein, sodass er mit der, wie bereits erwähnt, mit dem in der kürzeren Höhe ausgebildeten Trennelement 3' und seiner glatten Stirnseite 3.1 zusammenwirkt. Genauso gut wäre es denkbar, den Zwischenboden 11 analog zu den Längsleisten 1.3, 2.3 mit Ausnehmungen 6 oder Bohrungen 7 zu versehen, sodass die Trennelemente 3, 3' auch in den Zwischenboden 11 eingesteckt werden könnten.

In Figur 9 ist nochmals eine prinzipmäßige Schnittdarstellung im Wesentlichen analog zu der in Figur 7, jedoch für die Ausführungsvariante der Kabeldurchführung 200 gemäß Figur 8, dargestellt. Die Bohrungen 7 sind dabei vorzugsweise als Sacklochbohrungen ausgebildet, sodass um die gesamte Bohrung 7 herum das Material der Längsleiste 1.3 liegt und somit ein dichter und hinsichtlich der Zugentlastung insbesondere in der Laufrichtung L der eingelegten Kabel 5 hochbelastbarer Aufbau entsteht. Um eine zuverlässige Abdichtung zwischen der Längsleiste 1.3 und dem - hier beispielsweise kürzeren - Trennelement 3' zu gewährleisten, kann optional eine Dichtung im Bereich der einen Stirnseite 3.3 oder bei einer langen Trennelement 3 auch im Bereich beider Stirnseiten 3.3 vorgesehen sein. Eine solche Dichtung ist in der Darstellung der Figur 9 prinzipiell angedeutet und mit dem Bezugszeichen 8 versehen.

In der Darstellung der Figur 10 ist in einem Ausschnitt analog zu dem in Figur 6 eine weitere Ausführungsvariante zu erkennen. Anstelle der durchgehenden Ausnehmungen 6 in der Art einer doppel-T-förmigen Nut, beispielsweise in der Darstellung der Figur 6, und den Bohrungen 7 aus den Darstellungen der Figuren 8 und 9, sind hier zwei Ausnehmungen vorgesehen, welche beispielsweise die Form von Rechtecken mit abgerundeten Kanten aufweisen. In diese Ausnehmungen 6 sind zwei getrennt voneinander ausgeführte Einzelelemente 3.4 in Form von Balken eingesteckt, welche zusammen das Trennelement 3, 3' ausbilden. Das Trennelement 3, 3' kann also in Laufrichtung L der eingelegten Kabel 5 aus zwei - oder auch mehr - Teilen bestehen. Die Einzelelemente 3.4 des Trennelements 3, welche in der Darstellung der Figur 11 nochmals in dem Schnitt gemäß der Linie XI - XI in Figur 10 zu erkennen sind, weisen dabei weder Einsteckleisten 3.2 noch Zapfen 3.1 auf. Die Stäbe 3.4 sind vielmehr so ausgebildet, dass sie direkt in die Ausnehmungen 6 passen und somit mit ihrem stirnseitigen Ende direkt in die Ausnehmungen 6, welche mit der Form der Einzelelemente, zumindest im Bereich ihrer stirnseitigen Enden, korrespondieren, eingeschoben werden können. Dies lässt sich so auch auf einteilige Trennelemente 3 und 3', wie sie in den vorherigen Figuren dargestellt worden sind, entsprechend übertragen. Das macht insbesondere den Aufbau der Trennelemente 3, 3' sehr einfach, da diese keine Zapfen 3.1 oder Einsteckleisten 3.2 mehr aufweisen müssen. So reicht beispielsweise bei der Ausgestaltung in den Figuren 10 und 11 die Verwendung einfacher im Wesentlichen rechteckiger Balken als Einzelelemente 3.4 aus. Da durch das Fehlen der mit den Einsteckleisten 3.2 oder Zapfen 3.1 versehenen Stirnseiten 3.3 die Möglichkeit eines Anschlags fehlt, müssen die Ausnehmungen 6 alle mir derselben Tiefe gefertigt werden, sodass diese den Anschlag an den nunmehr dort aufliegenden Stirnseiten der Einzelelemente 3.4 des Trennelements 3, 3' ausbilden können.

In den Figuren 12 und 13 sind weitere Alternativen von Trennelementen 3, 3' dargestellt, welche so zwischen jeweils zwei der Tüllen 4 zu liegen kommen und formschlüssig sowie aufgrund des elastischen Materials der Tüllen 4 reibschlüssig mit diesen zusammenwirken. Die Tüllen 4 umschließen dabei die gesamte Kontur der Trennelemente 3, 3' weitgehend, sodass diese quasi innerhalb der jeweiligen Tülle 4 verschwinden. Dies ist insbesondere hinsichtlich unterschiedlicher Rastermaße der einzelnen Tüllen 4 bei der Bestückung eines Rahmens mit verschieden großen Tüllen 4 von entscheidendem Vorteil, da bei einem derartigen Aufbau die Breite des Rahmens nur von den Rastermaßen der Tüllen 4 und nicht auch von der Breite und Anzahl der Trennelemente 3, 3' abhängt. Der Aufbau des Trennelements 3, 3' in der Darstellung der Figur 12 ist dabei im Wesentlichen bauchig ausgeführt, nutzt also anders als die taillierte Ausführung, dieselben Prinzipien, jedoch mit einer Umkehrung der Form zwischen der Tülle 4 und dem Trennelement 3, 3'. Vergleichbares gilt für das sehr einfach ausgestaltete Trennelement 3, 3' in Figur 13, welches lediglich als Rundstab ausgebildet ist und insbesondere in einer in der Laufrichtung L der durchgeführten Kabel mittigen Bohrung 7 in der Längsleiste 1.3 platziert werden kann.

In der Darstellung der Figur 14 ist ein erstes Anwendungsbeispiel mit einer exemplarischen Beschickung der Kabeldurchführung 200 mit einer Vielzahl von unterschiedlichen Tüllen 4 dargestellt. Die hier dargestellte Variante der Montage, wobei auf die Darstellung der Kabel 5 aus Gründen der Übersichtlichkeit verzichtet worden ist, zeigt wiederum ein U-förmiges Rahmenunterteil 1 mit einer Längsleiste 2.3 als Deckel 2. Die Kabeldurchführung 200 als Ganzes ist über jeweils zwei seitliche Montagebohrungen 10 und darin angeordnete Schrauben mit der Wand 12 eines angedeuteten Schaltschranks verschraubt und dichtet so eine hier nicht erkennbare Öffnung in der Wand 12 des Schaltschranks ab, durch welche die hier nicht dargestellten Kabel 5, wiederum in die Tüllen 4 eingelegt, hindurchgeführt sein sollen. Der montierte Aufbau in der Darstellung der Figur 14 zeigt dabei eine Vielzahl von verschiedenartigen Tüllen, darunter auch eine sogenannte Blindtülle 4', welche keine Durchgangsbohrung aufweist. Zwischen dem Rahmenunterteil 1 und dem Deckel 2 sind zwei Trennelemente 3 mit der Innenhöhe des Rahmens der Kabeldurchführung 200 eingesetzt, und zwei unterschiedlich stark in ihrer Höhe verkürzte Trennelemente 3'. Jeweils oberhalb der verkürzten Trennelemente 3' befindet sich, bevor die nächste Tülle 4 folgt, einer der Zwischenböden 11, um die Druckkräfte möglichst gleichmäßig zu verteilen und alle Tüllen 4 mit möglichst homogenen Kräften zu beaufschlagen. Hierdurch lässt sich eine sehr gute Abdichtung des Aufbaus der Kabeldurchführung 200 erreichen.

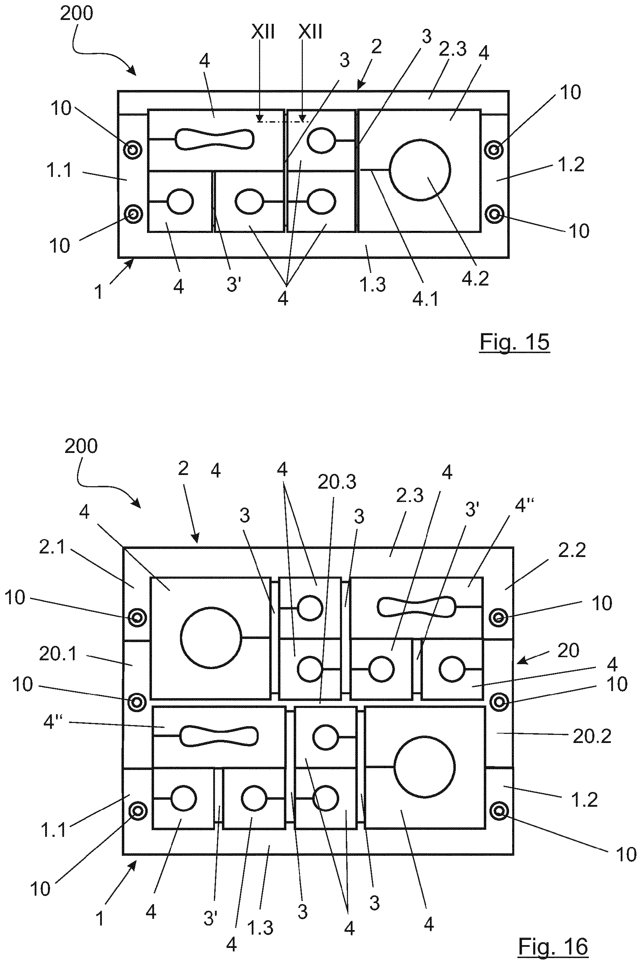

In der Darstellung der Figur 15 ist in einer reinen Draufsicht nochmals ein vergleichbarer Aufbau, hier ohne die Wand 12 des Schaltschranks, dargestellt. Der Aufbau soll dabei im Wesentlichen die Trennelemente 3, 3' nutzen, wie sie in den Figuren 12 und 13 dargestellt sind. Die einzelnen Tüllen 4 liegen dabei so dicht aneinander, dass die Trennelemente 3, 3' dazwischen kaum zu erkennen sind, wobei zur Verbesserung der Darstellung der Spalt zwischen den einzelnen Tüllen 4 in der Darstellung der Figur 15 sogar noch größer, als in der Realität, gezeichnet worden ist. Diese innerhalb der Breite der Tüllen 4 aufgenommenen Trennelemente 3, 3' ermöglichen den Einsatz einer unterschiedlichen Anzahl von Trennelementen 3, 3' innerhalb der Kabeldurchführung 200, ohne dass die außen gemessenen Rastermaße der einzelnen Tüllen 4 angepasst werden müssen. Der Deckel 2 und das Rahmenunterteil 1 können dabei beispielsweise verschraubt oder verklippt ausgeführt sein.

In Figur 16 ist ein Aufbau zu erkennen, bei dem das Rahmenunterteil 1 mit seinen zwei Schenkeln 1.1 und 1.2 sowie die Längsleiste 1.3 ein U ausbilden. Vergleichbares gilt für den Deckel 2 mit seinen Schenkelleisten 2.1 und 2.2 sowie seiner Längsleiste 2.3. Dazwischen befindet sich, analog wie bei der Darstellung gemäß Figur 3 aus dem Stand der Technik, ein Zwischenteil 20 mit seinen Schenkeln 20.1 und 20.2 sowie einer weiteren Längsleiste 20.3, welche einteilig mit den Schenkeln 20.1 und 20.2 ausgeführt ist, und welche sowohl oben als auch unten, oder hier auch in Form von durchgehenden Ausnehmungen 6 oder Bohrungen 7 die Möglichkeiten zum Einstecken der Trennelemente 3, 3' entsprechend aufweist.

In der Montagevariante der Figur 16 unten sind zwei Trennelemente 3 jeweils mit einer Höhe über die gesamte Höhe des Rahmens dargestellt sowie ein kürzeres Trennelement 3', hier das ganz links angeordnete Trennelement 3' in der Figur 16. Von rechts nach links ist die Montage so erfolgt, dass zuerst eine Tülle 4 mit den Rastermaßen 2:2 eingesetzt ist, dann ein Trennelement 3, dann übereinander zwei Tüllen 4 mit den Rastermaßen 1:1, dann erneut ein Trennelement 3. Im unteren Bereich folgt dann wiederum eine Tülle 4 mit dem Rastermaß 1:1, ein verkürztes Trennelement 3' und eine weitere Tülle 4 mit dem Rastermaß 1:1. Oberhalb in Kontakt mit den beiden Tüllen 4 und der Stirnseite 3.3 der verkürzten Trennelement 3' befindet sich eine weitere Tülle 4", welche beispielsweise zur Aufnahme eines Flachkabels konzipiert ist, und welche hier ausnahmsweise vom Rastermaß abweicht, da sie in ihrer Breite zusätzlich die Breite einer der Trennelemente 3 umfasst. Über seitliche Montagebohrungen 10 kann die Kabeldurchführung 200 zusammen mit einem optionalen zusätzlichen Dichtstreifen dann mit der hier nicht dargestellten Wand 12 um eine Öffnung zum Durchführen der Kabel 5, z.B. in den Schaltschrank, verschraubt werden. In der oberen Hälfte der Kabeldurchführung 200 in Figur 16 ist derselbe Aufbau gespiegelt nochmals ausgeführt. Im Gegensatz zur Darstellung in Figur 14 ist dabei auf die Zwischenböden 11 verzichtet worden beziehungsweise bildet die weitere Längsleiste 20.3 des Zwischenteils 20 einen solchen Zwischenboden 11 aus. Bei den oberhalb und unterhalb verkürzten Trennelementen 3, 3' befinden sich hier keine Zwischenböden 11, was prinzipiell auch denkbar ist.

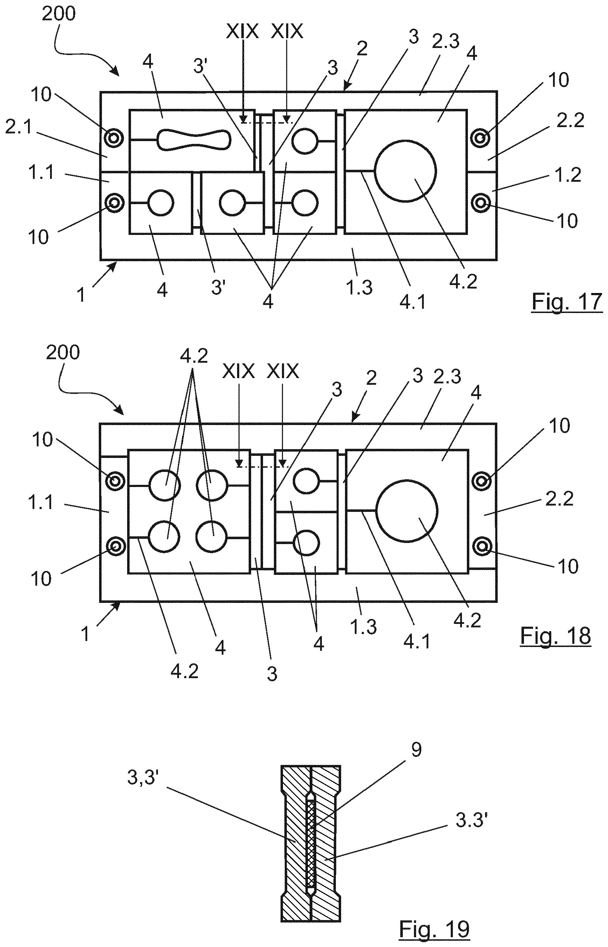

Alternativ dazu ist in der Darstellung der Figur 17 ein Aufbau zu erkennen, bei dem auch die in Figur 16 mit 4" bezeichnete Tülle 4 innerhalb des Rastermaßes verbleibt und ein Rastermaß von 2:1 aufweist. Der verbleibende Raum wird durch ein weiteres verkürztes Trennelement 3', welches in den Deckel 2 als Längsleiste 2.3 eingeschoben ist, und welches direkt im Anschluss an das mittlere der Trennelemente 3 zu liegen kommt, ausgeglichen. Dieser zusätzliche Einsatz eines direkt neben der höheren Trennelement 3' liegenden verkürzten Trennelements 3 hat dabei den Vorteil, dass keine Tüllen 4 notwendig sind, welche vom Rastermaß abweichen, ähnlich wie bei der Alternative gemäß Figur 15.

In der Darstellung der Figur 17 ist außerdem ein Rahmen eingesetzt, welcher sowohl beim Rahmenunterteil 1 als auch beim Deckel 2 eine U-förmige Ausgestaltung aufweist. Insbesondere können der Deckel 2 und das Rahmenunterteil 1 als identische Bauteile ausgeführt sein, welche beispielsweise auf der einen Seite von oben nach unten und auf der anderen Seite von unten nach oben miteinander verschraubt oder verklippt werden. Hierdurch werden weitere Kosten in der Herstellung und beim Werkzeugbau für die beispielsweise spritzgegossenen Rahmenunterteile 1 und Deckel 2 eingespart.

In der Darstellung der Figur 18 ist eine weitere Ausführungsvariante zu erkennen. Auch diese unterscheidet sich hinsichtlich des Rahmenunterteils 1 und des Deckels 2 nochmals von den bisherigen Ausführungsvarianten, weil sowohl das Rahmenunterteil 1 als auch der Deckel 2 hier im Wesentlichen L-förmig ausgebildet sind und somit das Rahmenunterteil die Längsleiste 1.3 und eine Schenkelleiste 1.1 trägt, das Rahmenoberteil, also der Deckel 2, ebenfalls eine Längsleiste 2.3 und eine Schenkelleiste 2.1.

Der Aufbau ist wiederum von rechts nach links zu Beginn so bestückt wie der Aufbau in Figur 17. Dann folgen auf die beiden übereinander angeordneten Tüllen 4 mit dem Rastermaß 1:1 zwei der höheren Trennelemente 3 und eine weitere große Tülle 4 mit dem Rastermaß 2:2, welche in dem hier dargestellten Ausführungsbeispiel vier Durchgangsbohrungen 4.2 aufweist. Auch hier ist zum Ausgleich für die Anpassung der Gesamtbreite das Aneinanderlegen von zwei Trennelementen 3 sinnvoll, um keine speziellen Tüllen 4 vorsehen zu müssen.

Um auch bei aneinander liegenden Trennelementen 3, 3', wie sie beispielsweise beim Aufbau in den Figuren 17 und 18 beschrieben worden sind, eine ausreichende Abdichtung der Kabeldurchführung 200 zu gewährleisteten, kann es nun vorgesehen sein, dass zwischen zwei aneinander liegenden Trennelementen 3, 3' ein Dichtmaterial 9 eingebracht ist, um die aus einem härteren Kunststoff als die Tüllen 4 hergestellten Trennelemente 3.3', wenn diese aneinander liegen, zuverlässig abzudichten. Dies ist in Figur 19 zu erkennen. Bei einer reinen Anlage der Kunststoffoberflächen der Trennelemente 3, 3' aneinander wäre eine solche Abdichtung nicht oder nur eingeschränkt möglich. Durch das elastische Dichtmaterial 9 zwischen den Trennelementen 3, welches beispielsweise bei der Montage als Dichtstreifen eingeklebt werden kann, kommt es zu einer sehr guten Abdichtung, sodass insgesamt ein sehr dichter Aufbau der Kabeldurchführung 200 trotz ihrer hohen Flexibilität ermöglicht wird, was ein entscheidender Vorteil ist. Selbstverständlich lassen sich die verschiedenen Varianten von Rahmen, Tüllen 4 und Trennelementen 3, 3' beliebig untereinander kombinieren und insbesondere auch vermischt mit einander einsetzen, sofern sie in den Schutzumfang der beigefügten Ansprüche fallen.

## Patentansprüche

1. Kabeldurchführung (200), mit
1.1 einem teilbaren Rahmen, welcher wenigstens zwei Längsleisten (1.3, 2.3, 20.3) und wenigstens zwei Schenkelleisten (1.1, 1.2, 2.1, 2.2, 20.1, 20.2) aufweist, die zusammen in einer Ebene senkrecht zur Laufrichtung (L) der durchgeführten Kabel (5) liegen,
1.2 wenigstens einer Tülle (4), welche wenigstens eine Bohrung (4.2) zum Hindurchführen des Kabels (5) aufweist;
1.3 zwischen den Längsleisten (1.3, 2.3, 20.3) stehende Trennelemente (3, 3'), von denen zumindest eines einen Zwischenraum (Z) zwischen sich und einem benachbarten Trennelement (3, 3') oder einer der Schenkelleisten (1.1, 1.2, 2.1, 2.2, 20.1, 20.2) ausbildet, welcher zur Aufnahme der wenigstens einen Tülle (4) ausgebildet ist, welche ihrerseits wenigstens eine Bohrung (4.2) zum Hindurchführen des Kabels (5) aufweist;
und mit den folgenden Merkmalen:
1.4 jede der Längsleisten (1.3, 2.3, 20.3) weist auf zumindest ihrer der jeweils anderen Längsleiste (1.3, 2.3, 20.3) zugewandten Seite eine Vielzahl von Bohrungen (7) oder Ausnehmungen (6) auf;
1.5 jedes Trennelement (3, 3') korrespondiert zumindest im Bereich wenigstens einer seiner stirnseitigen Enden mit den Bohrungen (7) oder den Ausnehmungen (6) in den Längsleisten (1.3, 2.3, 20.3), sodass die Trennelemente (3, 3') quer zur Laufrichtung (L) der durchgeführten Kabel (5) in die Bohrungen (7) oder Ausnehmungen (6) einsteckbar sind;
1.5 die Trennelemente (3, 3') sind in Laufrichtung (L) der eingelegten Kabel (5) mit wenigstens einer Vertiefung tailliert ausgebildet, sodass ein formschlüssiger Kontakt mit der einzelnen Tüllen (4) herstellbar ist.

2. Kabeldurchführung (200) nach Anspruch 1, **dadurch gekennzeichnet, dass** jedes Trennelement (3, 3')auf wenigstens einer seiner den Längsleisten (1.3, 2.3, 20.3) zugewandten Stirnseiten mit Zapfen (3.1) oder Einsteckleisten (3.2) versehen ist, welche jeweils mit den Bohrungen (7) oder den Ausnehmungen (6) in den Längsleisten (1.3, 2.3, 20.3) korrespondieren.

3. Kabeldurchführung (200) nach Anspruch 1 oder 2, **dadurch gekennzeichnet, dass** die Bohrungen (7) oder die Ausnehmungen (6) in den Längsleisten (1.3, 2.3, 20.3) so ausgeführt sind, dass zwischen den Bohrungen (7) oder den Ausnehmungen (6) und beiden Außenkanten der Längsleiste (1.3, 2.3, 20.3) in Laufrichtung (L) der durchgeführten Kabel (5) Material der Längsleiste (1.3, 2.3, 20.3) verbleibt.

4. Kabeldurchführung (200) nach Anspruch 1, 2 oder 3, **dadurch gekennzeichnet, dass** die Bohrungen (7) als Sacklochbohrungen ausgebildet sind oder die Ausnehmungen (6) als nicht durch das Material der Längsleiste (1.3, 2.3, 20.3) durchgehende Ausnehmung ausgebildet sind.

5. Kabeldurchführung (200) nach einem der einem der Ansprüche 1 bis 4, **dadurch gekennzeichnet, dass** die geometrischen Abmessungen oder die Formgebung der jeweils korrespondierenden stirnseitigen Enden der Trennelemente (3,3'), Zapfen (3.1) und Bohrungen (7) oder Einsteckleisten (3.2) und Ausnehmungen (6) so ausgebildet sind, dass die eingesteckten Trennelemente (3, 3') in einer der die Längsleisten (1.3, 2.3, 20.3) einen strammen Sitz aufweisen und in der anderen der Längsleisten (1.3, 2.3, 20.3) einen lockeren Sitz aufweisen.

6. Kabeldurchführung (200) nach Anspruch 5, **dadurch gekennzeichnet, dass** die jeweils korrespondierenden Zapfen (3.1) und Bohrungen (7) oder Einsteckleisten (3.2) und Ausnehmungen (6) über wenigstens ein Dichtelement verfügen, sodass die eingesteckten Trennelemente (3, 3') in der einen der Längsleisten (1.3, 2.3, 20.3) einen strammen Sitz aufweisen.

7. Kabeldurchführung (200) nach einem der Ansprüche 1 bis 6, **dadurch gekennzeichnet, dass** zwischen den Schenkelleisten (1.1, 1.2, 2.1, 2.2, 20.1, 20.2) oder zwischen zwei der Trennelemente (3, 3') oder zwischen einer der Schenkelleisten (1.1, 1.2, 2.1, 2.2, 20.1, 20.2) und einem der Trennelemente (3, 3') Zwischenböden vorgesehen sind.

8. Kabeldurchführung (200) nach Anspruch 7, **dadurch gekennzeichnet, dass** die Zwischenböden (11) Ausnehmungen (6) oder Bohrungen (7) analog zu den Längsleisten (1.3, 2.3, 20.3) aufweisen.

9. Kabeldurchführung (200) nach Anspruch 7 oder 8, **dadurch gekennzeichnet, dass** die Zwischenböden (11) zwischen den Schenkelleisten (20.1, 20.2) fest mit diesen verbunden sind und eine weitere Längsleiste (20.3) ausbilden, welche zumindest an den zwei gegenüberliegenden, den jeweils anderen Längsleisten (1.3, 2.3) zugewandten Seiten die Ausnehmungen (6) oder Bohrungen (7) aufweist.

10. Kabeldurchführung (200) nach Anspruch 7, 8 oder 9, **dadurch gekennzeichnet, dass** die Zwischenböden (11) zwischen zwei der Trennelemente (3, 3') oder zwischen einer der Schenkelleisten (1.1, 1.2, 2.1, 2.2, 20.1, 20.2) und einem der Trennelemente (3, 3') so geformt sind, dass sie formschlüssig in der Laufrichtung (L) der Kabel (5) mit den Trennelementen (3,3') oder den Trennelementen (3, 3') und den Schenkelleisten (1.1, 1.2, 2.1, 2.2, 20.1, 20.2) zusammenwirken.

11. Kabeldurchführung (200) nach einem der Ansprüche 1 bis 10, **dadurch gekennzeichnet, dass** am Ende jeder der Längsleisten (1.3, 2.3) eine Schenkelleiste (1.1, 2.1) vorgesehen ist, sodass die Längsleiste (1.3, 2.3) und die Schenkelleiste (1.1, 2.1) ein L bilden, oder das an beiden Enden jeweils wenigstens einer der Längsleisten (1.3, 2.3) jeweils eine der Schenkelleisten (1.1, 1.2, 2.1, 2.2) vorgesehen ist, sodass die Längsleiste (1.3, 2.3) und die Schenkelleisten (1.1, 1.2, 2.1, 2.2) ein U bilden.

12. Kabeldurchführung (200) nach einem der Ansprüche 1 bis 11, **dadurch gekennzeichnet, dass** die Trennelemente (3, 3') ungleich hoch ausgebildet sind.

13. Kabeldurchführung (200) nach Anspruch 12 und nach einem der Ansprüche 2 bis 9, **dadurch gekennzeichnet, dass** die Trennelemente (3) mit einer der Innenhöhe des Rahmens entsprechenden Höhe auf beiden Stirnseiten (3.3) Zapfen (3.1) oder Einsteckleisten (3.2) aufweisen, und dass die Trennelemente (3') mit einer kürzeren Höhe auf einer der Stirnseiten (3.3) Zapfen (3.1) oder Einsteckleisten (3.2) aufweisen.

14. Kabeldurchführung (200) nach Anspruch 1 bis 13, **dadurch gekennzeichnet, dass** die Trennelemente (3, 3') in wenigstens einer der Vertiefungen ihrer Taillierung mit einem elastischen Dichtmaterial (9) versehen sind.

15. Kabeldurchführung (200) nach einem der Ansprüche 1 bis 14, **dadurch gekennzeichnet, dass** jedes der Trennelemente (3, 3') in Laufrichtung (L) der eingelegten Kabel (5) aus wenigstens zwei Einzelelemente (3.4) ausgebildet ist

16. Kabeldurchführung (200) nach einem der Ansprüche 1 bis 15, **dadurch gekennzeichnet, dass** die die Ausnehmungen (6) sich mit einer größeren Abmessung in Laufrichtung (L) der eingelegten Kabel (5) erstrecken als dazu senkrecht und parallel zu den Längsleisten (1.3, 2.3, 20.3).

17. Kabeldurchführung (200) nach einem der Ansprüche 1 bis 16, **dadurch gekennzeichnet, dass** die Ausnehmungen (6) doppel-T-förmig ausgebildet sind.

18. Kabeldurchführung (200) nach einem der Ansprüche 1 bis 17, **dadurch gekennzeichnet, dass** die Trennelemente (3, 3'), die Zapfen (3.1) und die Einsteckleisten (3.2) auf ihrer der Bohrung (7) oder Ausnehmung (6) zugewandten Seite angefast sind.

19. Kabeldurchführung (200) nach einem der Ansprüche 2 bis 18, **dadurch gekennzeichnet, dass** die Trennelemente (3, 3') auf ihrer mit den Zapfen (3.1) oder Einsteckleisten (3.2) versehenen Stirnseite eine Dichtung (8) aufweisen.

20. Kabeldurchführung (200) nach einem der Ansprüche 1 bis 19, **dadurch gekennzeichnet, dass** die Schenkelleisten (1.1, 1.2, 2.1, 2.2, 20.1, 20.2) senkrecht auf den Längsleisten (1.3, 2.3, 20.3) stehen und die Trennelemente (3, 3') parallel zu den Schenkelleisten (1.1, 1.2, 2.1, 2.2, 20.1, 20.2) verlaufen.

## Claims

1. Cable lead-through (200), comprising
1.1 a divisible frame, which has at least two longitudinal strips (1.3, 2.3, 20.3) and at least two side strips (1.1, 1.2, 2.1, 2.2, 20.1, 20.2), which together lie in a plane perpendicular to the running direction (L) of the cables (5) passed through,
1.2 at least one grommet (4), which has at least one bore (4.2) for passing the cable (5) through;
1.3 separating elements (3, 3') located between the longitudinal strips (1.3, 2.3, 20.3), of which at least one forms an intermediate space (Z) between itself and an adjacent separating element (3, 3') or one of the side strips (1.1, 1.2, 2.1, 2.2, 20.1, 20.2), which is designed to accommodate the at least one grommet (4), which in turn has at least one bore (4.2) for passing the cable (5) through;
and comprising the following features:
1.4 each of the longitudinal strips (1.3, 2.3, 20.3) has a plurality of holes (7) or recesses (6) on at least its side facing the respective other longitudinal strip (1.3, 2.3, 20.3);
1.5 each separating element (3, 3') corresponds to the holes (7) or the recesses (6) in the longitudinal strips (1.3, 2.3, 20.3) at least in the region of at least one of its front-side ends, so that the separating elements (3, 3') can be inserted into the holes (7) or recesses (6) transversely to the running direction (L) of the cables (5) passed through;
1.6 the separating elements (3, 3') are waisted in the running direction (L) of the inserted cables (5) with at least one depression, so that a form-fit contact with the individual grommets (4) can be produced.

2. Cable lead-through (200) according to claim 1, **characterized in that** each separating element (3, 3') is provided on at least one of its end faces facing the longitudinal strips (1.3, 2.3, 20.3) with pins (3.1) or insertion strips (3.2), which correspond in each case to the holes (7) or the recesses (6) in the longitudinal strips (1.3, 2.3, 20.3).

3. Cable lead-through (200) according to claim 1 or 2, **characterized in that** the holes (7) or the recesses (6) in the longitudinal strips (1.3, 2.3, 20.3) are designed such that material of the longitudinal strip (1.3, 2.3, 20.3) remains between the holes (7) or the recesses (6) and both outer edges of the longitudinal strip (1.3, 2.3, 20.3) in the running direction (L) of the cables (5) passed through.

4. Cable lead-through (200) according to claim 1, 2 or 3, **characterized in that** the holes (7) are designed as blind holes or the recesses (6) are designed as a recess that does not pass through the material of the longitudinal strip (1.3, 2.3, 20.3).

5. Cable lead-through (200) according to one of claims 1 to 4, **characterized in that** the geometric dimensions or the shape of the respectively corresponding end faces of the separating elements (3, 3'), pins (3.1) and holes (7) or insertion strips (3.2) and recesses (6) are designed in such a way that the inserted separating elements (3, 3') have a tight fit in one of the longitudinal strips (1.3, 2.3, 20.3) and a loose fit in the other of the longitudinal strips (1.3, 2.3, 20.3).

6. Cable lead-through (200) according to claim 5, **characterized in that** the respectively corresponding pins (3.1) and holes (7) or insertion strips (3.2) and recesses (6) have at least one sealing element, so that the inserted separating elements (3, 3') have a tight fit in one of the longitudinal strips (1.3, 2.3, 20.3).

7. Cable lead-through (200) according to one of claims 1 to 6, **characterized in that** intermediate bases are provided between the side strips (1.1, 1.2, 2.1, 2.2, 20.1, 20.2) or between two of the separating elements (3, 3') or between one of the side strips (1.1, 1.2, 2.1, 2.2, 20.1, 20.2) and one of the separating elements (3, 3').

8. Cable lead-through (200) according to claim 7, **characterized in that** the intermediate bases (11) have recesses (6) or holes (7) analogous to the longitudinal strips (1.3, 2.3, 20.3).

9. Cable lead-through (200) according to claim 7 or 8, **characterized in that** the intermediate bases (11) between the side strips (20.1, 20.2) are firmly connected to the latter and form a further longitudinal strip (20.3) which has the recesses (6) or holes (7) at least on the two opposite sides facing the respective other longitudinal strips (1.3, 2.3).

10. Cable lead-through (200) according to claim 7, 8 or 9, **characterized in that** the intermediate bases (11) between two of the separating elements (3, 3') or between one of the side strips (1.1, 1.2, 2.1, 2.2, 20.1, 20.2) and one of the separating elements (3, 3') are shaped in such a way that they interact positively with the separating elements (3, 3') or the separating elements (3, 3') and the side strips (1.1, 1.2, 2.1, 2.2, 20.1, 20.2) in the running direction (L) of the cables (5).

11. Cable lead-through (200) according to one of claims 1 to 10, **characterized in that** a side strip (1.1, 2.1) is provided at the end of each of the longitudinal strips (1.3, 2.3), so that the longitudinal strip (1.3, 2.3) and the side strip (1.1, 2.1) form an L, or **in that** one of the side strips (1.1, 1.2, 2.1, 2.2) is provided in each case at each end of at least one of the longitudinal strips (1.3, 2.3), so that the longitudinal strip (1.3, 2.3) and the side strips (1.1, 1.2, 2.1, 2.2) form a U.

12. Cable lead-through (200) according to one of claims 1 to 11, **characterized in that** the separating elements (3, 3') are of unequal height.

13. Cable lead-through (200) according to claim 12 and according to one of claims 2 to 9, **characterized in that** the separating elements (3) with a height corresponding to the internal height of the frame have pins (3.1) or insertion strips (3.2) on both end faces (3.3), and **in that** the separating elements (3') with a shorter height have pins (3.1) or insertion strips (3.2) on one of the end faces (3.3).

14. Cable lead-through (200) according to claim 1 to 13, **characterized in that** the separating elements (3, 3') are provided with an elastic sealing material (9) in at least one of the depressions of their waist.

15. Cable lead-through (200) according to one of claims 1 to 14, **characterized in that** each of the separating elements (3, 3') is formed from at least two individual elements (3.4) in the running direction (L) of the inserted cables (5).

16. Cable lead-through (200) according to one of claims 1 to 15, **characterized in that** the recesses (6) extend with a larger dimension in the running direction (L) of the inserted cables (5) than perpendicular thereto and parallel to the longitudinal strips (1.3, 2.3, 20.3).

17. Cable lead-through (200) according to one of claims 1 to 16, **characterized in that** the recesses (6) are double-T-shaped.

18. Cable lead-through (200) according to one of claims 1 to 17, **characterized in that** the separating elements (3, 3'), the pins (3.1) and the insertion strips (3.2) are chamfered on their side facing the bore (7) or recess (6).

19. Cable lead-through (200) according to one of claims 2 to 18, **characterized in that** the separating elements (3, 3') have a seal (8) on their end face provided with the pins (3.1) or insertion strips (3.2).

20. Cable lead-through (200) according to one of claims 1 to 19, **characterized in that** the side strips (1.1, 1.2, 2.1, 2.2, 20.1, 20.2) are perpendicular to the longitudinal strips (1.3, 2.3, 20.3) and the separating elements (3, 3') extend parallel to the side strips (1.1, 1.2, 2.1, 2.2, 20.1, 20.2).

## Revendications

1. Traversée de câbles (200) avec
1.1 un cadre divisible qui comporte au moins deux barres longitudinales (1.3, 2.3, 20.3) et au moins deux barres formant des bras (1.1, 1.2, 2.1, 2.2, 20.1, 20.2) qui se trouvent ensemble dans un plan perpendiculaire au sens de passage (L) des câbles (5) passés à travers,
1.2 au moins un passe-câbles (4) qui comporte au moins un perçage (4.2) pour le passage du câble (5) ;
1.3 des éléments de séparation (3, 3') placés entre les barres longitudinales (1.3, 2.3, 20.3) dont au moins une forme entre elle-même et un élément de séparation (3, 3') voisin ou une des barres formant des bras (1.1, 1.2, 2.1, 2.2, 20.1, 20.2) un espace intermédiaire (Z) qui est conçu pour recevoir l'au moins un passe-câbles (4), lequel présente pour sa part au moins un perçage (4.2) pour le passage du câble (5) ;
et avec les caractéristiques suivantes :
1.4 chacune des barres longitudinales (1.3, 2.3, 20.3) présente, au moins sur son côté tourné vers l'autre barre longitudinale (1.3, 2.3, 20.3), plusieurs perçages (7) ou creux (6) ;
1.5 chaque élément de séparation (3, 3') correspond, au moins dans la région d'au moins une de ses extrémités frontales, avec les perçages (7) ou les creux (6) des barres longitudinales (1.3, 2.3, 20.3), de sorte que les éléments de séparation (3, 3') peuvent être insérés dans les perçages (7) ou les creux (6) transversalement par rapport au sens de passage (L) des câbles (5) passés à travers ;
1.5 les éléments de séparation (3, 3') sont encochés avec au moins un renfoncement dans le sens de passage (L) des câbles (5) posés de façon à pouvoir établir un contact par engagement positif avec les différents passe-câbles (4).

2. Traversée de câbles (200) selon la revendication 1, **caractérisée en ce que** chaque élément de séparation (3, 3') est muni, au moins sur ses faces frontales tournées vers les barres longitudinales (1.3, 2.3, 20.3), de cônes (3.1) ou de mortaises (3.2) qui correspondent chacune aux perçages (7) ou aux creux (6) des barres longitudinales (1.3, 2.3, 20.3).

3. Traversée de câbles (200) selon la revendication 1 ou 2, **caractérisée en ce que** les perçages (7) ou les creux (6) sont réalisés dans les barres longitudinales (1.3, 2.3, 20.3) de telle manière qu'il reste du matériau de la barre longitudinale (1.3, 2.3, 20.3) entre les perçages (7) ou les creux (6) et les deux arêtes extérieures de la barre longitudinale (1.3, 2.3, 20.3) dans le sens de passage (L) des câbles (5) passés à travers.

4. Traversée de câbles (200) selon la revendication 1, 2 ou 3, **caractérisée en ce que** les perçages (7) sont conformés comme des trous borgnes ou les creux (6) sont conformés comme des creux ne traversant pas le matériau de la barre longitudinale (1.3, 2.3, 20.3).

5. Traversée de câbles (200) selon l'une des revendications 1 à 4, **caractérisée en ce que** les dimensions géométriques ou la conformation des extrémités frontales en correspondance des éléments de séparation (3, 3'), cônes (3.1) et perçages (7) ou mortaises (3.2) et creux (6) sont conçues de telle manière que les éléments de séparation (3, 3') emboîtés soient ajustés de façon serrée dans une des barres longitudinales (1.3, 2.3, 20.3) et ajustés de façon peu serrée dans l'autre des barres longitudinales (1.3, 2.3, 20.3).

6. Traversée de câbles (200) selon la revendication 5, **caractérisée en ce que** les cônes (3.1) et perçages (7) ou mortaises (3.2) et creux (6) qui se correspondent possèdent au moins un élément d'étanchéité, de sorte que les éléments de séparation (3, 3') emboîtés sont ajustés de façon serrée dans l'une des barres longitudinales (1.3, 2.3, 20.3).

7. Traversée de câbles (200) selon l'une des revendications 1 à 6, **caractérisée en ce que** des doubles fonds sont prévus entre les barres formant des bras (1.1, 1.2, 2.1, 2.2, 20.1, 20.2) ou entre deux des éléments de séparation (3, 3') ou entre une des barres formant des bras (1.1, 1.2, 2.1, 2.2, 20.1, 20.2) et un des éléments de séparation (3, 3').

8. Traversée de câbles (200) selon la revendication 7, **caractérisée en ce que** les doubles fonds (11) comportent des creux (6) ou des perçages (7) analogues à ceux des barres longitudinales (1.3, 2.3, 20.3).

9. Traversée de câbles (200) selon la revendication 7 ou 8, **caractérisée en ce que** les doubles fonds (11) sont solidement reliés aux barres formant des bras (20.1, 20.2) entre celles-ci et forment une autre barre longitudinale (20.3) qui présente, au moins sur les deux côtés se faisant face tournés vers les autres barres longitudinales (1.3, 2.3), les creux (6) ou les perçages (7).

10. Traversée de câbles (200) selon la revendication 7, 8 ou 9, **caractérisée en ce que** les doubles fonds (11) sont formés entre deux des éléments de séparation (3, 3') ou entre une des barres formant des bras (1.1, 1.2, 2.1, 2.2, 20.1, 20.2) et un des éléments de séparation (3, 3'), de telle manière qu'ils coopèrent en correspondance de forme dans le sens de passage (L) des câbles (5) avec les éléments de séparation (3, 3') ou les éléments de séparation (3, 3') et les barres formant des bras (1.1, 1.2, 2.1, 2.2, 20.1, 20.2).

11. Traversée de câbles (200) selon l'une des revendications 1 à 10, **caractérisée en ce qu'**une barre formant un bras (1.1, 2.1) est prévue à l'extrémité de chacune des barres longitudinales (1.3, 2.3), de sorte que la barre longitudinale (1.3, 2.3) et la barre formant un bras (1.1, 2.1) forment un L, ou **en ce qu'**une des barres formant des bras (1.1, 1.2, 2.1, 2.2) est prévue à chacune des deux extrémités d'au moins une des barres longitudinales (1.3, 2.3), de sorte que la barre longitudinale (1.3, 2.3) et les barres formant des bras (1.1, 1.2, 2.1, 2.2) forment un U.

12. Traversée de câbles (200) selon l'une des revendications 1 à 11, **caractérisée en ce que** les éléments de séparation (3, 3') sont de hauteur inégale.

13. Traversée de câbles (200) selon la revendication 12 et selon l'une des revendications 2 à 9, **caractérisée en ce que** les éléments de séparation (3) ayant une hauteur correspondant à la hauteur intérieure du cadre présentent des cônes (3.1) ou des mortaises (3.2) sur les deux faces d'extrémité (3.3) et **en ce que** les éléments de séparation (3') ayant une plus petite hauteur présentent des cônes (3.1) ou des mortaises (3.2) sur une des faces d'extrémité (3.3).

14. Traversée de câbles (200) selon la revendication 1 à 13, **caractérisée en ce que** les éléments de séparation (3, 3') sont dotés d'un matériau d'étanchéité élastique (9) dans la région de l'un des renfoncements de leurs encoches.

15. Traversée de câbles (200) selon l'une des revendications 1 à 14, **caractérisée en ce que** chacun des éléments de séparation (3, 3') est formé d'au moins deux éléments distincts (3.4) dans le sens de passage (L) des câbles (5) posés.

16. Traversée de câbles (200) selon l'une des revendications 1 à 15, **caractérisée en ce que** les creux (6) ont une plus grande dimension dans le sens de passage (L) des câbles (5) posés que perpendiculairement à celui-ci et parallèlement aux barres longitudinales (1.3, 2.3, 20.3).

17. Traversée de câbles (200) selon l'une des revendications 1 à 16, **caractérisée en ce que** les creux (6) sont en forme de double T.

18. Traversée de câbles (200) selon l'une des revendications 1 à 17, **caractérisée en ce que** les éléments de séparation (3, 3'), les cônes (3.1) et les mortaises (3.2) sont chanfreinés sur leur côté tourné vers le perçage (7) ou le creux (6).

19. Traversée de câbles (200) selon l'une des revendications 2 à 18, **caractérisée en ce que** les éléments de séparation (3, 3') comportent un joint d'étanchéité (8) sur leur face d'extrémité munie des cônes (3.1) ou des mortaises (3.2).

20. Traversée de câbles (200) selon l'une des revendications 1 à 19, **caractérisée en ce que** les barres formant des bras (1.1, 1.2, 2.1, 2.2, 20.1, 20.2) s'étendent perpendiculairement sur les barres longitudinales (1.3, 2.3, 20.3) et les éléments de séparation (3, 3') parallèlement aux barres formant des bras (1.1, 1.2, 2.1, 2.2, 20.1, 20.2).
